# EUROPEAN PATENT SPECIFICATION

(11) **EP 2 036 807 B1**
(45) Date of publication and mention of the grant of the patent: **28.08.2013**
(21) Application number: 08009950.0
(22) Date of filing: 30.05.2008
(51) Int. Cl.: B62K 11/10, B62K 19/12, B62K 19/46, B62K 19/30

(54) **Motorcycle**
Motorrad
Motocyclette

(30) Priority: 14.09.2007 JP 2007239289
(43) Date of publication of application: 18.03.2009
(73) Proprietor: Yamaha Hatsudoki Kabushiki Kaisha, Iwata-shi, Shizuoka 438-8501 (JP)
(72) Inventor: Ono, Takashi, Iwata-shi Shizuoka-ken 438-8501 (JP); Kanou, Yasunobu, Iwata-shi Shizuoka-ken 438-8501 (JP)
(74) Representative: Grünecker, Kinkeldey, Stockmair & Schwanhäusser

(56) References cited:
- EP-A- 1 647 478
- EP-A- 1 695 898
- JP-A- 2002 225 771
- JP-A- 2003 237 666

## Description

The present invention relates to a motorcycle according to the preamble part of claim 1. In particular, the present invention relates to a motorcycle having a body frame including a left and a right frame sections extending in a longitudinal direction of a vehicle, and a storage space formed between the left and right frame sections.

In a motorcycle, there is a case that a body frame of the motorcycle is partially made by casting due to the reasons such as easy manufacturability and possible reduction of the number of parts. For example, JP-A-1317886 discloses a structure that left and right rear frame sections on which a seat is mounted are made by casting, and that the left and the right rear frame sections are welded to each other.

Meanwhile, from a perspective of enlarging a storing capacity for load, a seat can be detachable or rotatable by a hinge so that a space below the seat between the left and the right rear frame sections can be used as a storage space. In this case, in order to enlarge the storing capacity as much as possible, it is considered to extend a distance between the left and the right rear frame sections In a vehicle width direction.

The storing capacity can be enlarged simply with extension of the distance between the left and the right rear frame sections; however, there occurs a problem such that taking in and out of an object to be stored is interfered with an opening for taking in and out of a stored object. The present invention is made in view of the condition above.

JP2003237666 and EP1647478 A1 both disclose a motorcycle comprising a body frame having left and right frame sections. Both frame sections extend In a longitudinal direction of the motorcycle. A storage space is formed between left and right sidewalls of the frame sections. In an upper area of the sidewalls, a distance between the left and right sidewalls in a width direction of the motorcycle is greater than in a lower area of the sidewalls.

EP1695898 A1 discloses a motorcycle seat frame including a bottom section extending in a longitudinal direction of the motorcycle. A pair of sidewall sections extend along the longitudinal direction and are provided on the bottom section such that the bottom section is interposed between the sidewall sections. At least one rib is provided on the bottom section and extends in a direction which traverses the longitudinal direction.

It is an objective of the present invention to provide a motorcycle having an enlarged storing capacity, wherein a stored object can be easily taken in and out.

According to the present invention, said objective is solved by a motorcycle having the combination of features of independent claim 1.

Preferred embodiments of the present invention are loid down in the appended dependent claims 2 - 15.

Preferably, the left and right frame sections are integrally formed castings.

. Further, preferably the first horizontal side and/or the second horizontal side extend in the longitudinal direction of the motorcycle.

Still further, preferably an upper edge of each of the left and right frame sections has a substantially upside-down U shape In cross-section with the first, horizontal side extending outwardly In the width direction of the motorcyde and a first vertical and extending downwardly from the first horizontale side.

Preferably, a lower edge of each of the left and right frame sections has a substantially upside-down U shape In crosa-sectlon with the second horizontal side extending Inwardly In the width direction of the motorcycle and a pair of second vertical sides extending downwardly from the second horizontal side.

Further, preferably at least a frame member, preferably an extrusion member extending in the longitudinal direction of the motorcycle, is welded to a front end and/or a rear end of the left and right frame sections.

Still further, a storage box is placed in the storage space between the left and right sidewalls of the left and right frame sections.

Yet further still, preferably the left and right sidewalls of the left and right frame sections at least partially overlap with a portion of the storage box when viewed from a side of the motorcycle.

Contacting sections are is provided where the left sidewall of the left frame section contacts a left sidewall of the storage box and the right sidewall of the right frame section contacts a right sidewall of the storage box.

According to another preferred embodiment, each contacting section is constituted by interposing an elastic member between the left sidewall of the left frame section and the left sidewall of the storage box, and between the right sidewall of the right frame section and the right sidewall of the storage box.

Preferably, the left and right frame sections are connected with at least a cross wall section extending in the width direction of the motorcycle, preferably a front and a rear opening are formed with the left and right frame sections, a middle cross wall section and a front or a rear cross wall section, respectively, and preferably a bottom wall of the storage box faces an upper edge of a rear wheel of the motorcycle via the rear opening.

Further, preferably the storage box is attached to at least a mounting seat formed on the first horizontal side of each of the left and right frame sections.

Still further, preferably at least a seat support section is formed on the left and right frame sections, said seat support section supporting a seat for making the storage space openable and closable via a hinge.

Yet further still, preferably the distance between the left and right sidewalls gradually increases towards the upper area of the storage space.

In the following, the present invention is explained in greater detail by means of embodiments thereof in conjunction with the accompanying drawings, wherein:
- FIG. 1: is a side view of a motorcycle according to an embodiment,
- FIG. 2: is a plan view of the motorcycle,
- FIG. 3: is a side view of a front frame of the motorcycle,
- FIG. 4: is a side view of a rear frame including a storage box of the motorcycle,
- FIG. 5: is a sectional view of an engine suspension section of the front frame (taken along the line V-V in FIG. 3),
- FIG. 6: is a sectional view of the engine suspension section of the front frame (taken along the line VI-VI in FIG. 3),
- FIG. 7: is a sectional view of the engine suspension section of the rear frame (taken along the line VII-VII in FIG. 3),
- FIG. 8: is a side view of the rear frame,
- FIG. 9: is a plan view of the rear frame,
- FIG. 10: is a sectional view of the rear frame and the storage box (taken along the line X-X in FIG. 9),
- FIG. 11: is a right side view of the rear frame,
- FIG. 12: is a bottom view of the rear frame (taken along the arrow XII in FIG. 8), and
- FIG. 13: is a sectional front view of the rear frame (taken along the line XIII-XIII in FIG. 9).

Among others, the following reference signs are used in the Figures:
1: motorcycle
2: body frame
8: rear wheel
9: seat
10: storage box
13, 13: left, right rear frame sections (left, right frame sections)
13a, 13a: left and right sidewalls
13b': seat support section
13d: cross wall section
13e: upper edge section
13f: first horizontal side
13g: first vertical side
13h: lower edge section
13i: second horizontal side
13j, 13k: second outside, inside vertical side
13n, 13p: opening
13q, 13r: box mounting seat (mounting section)
38: elastic member (contact section)
70: frame member
A: vehicle centerline
B: storage space

One embodiment of a motorcycle will be described below with reference to the accompanying drawings.

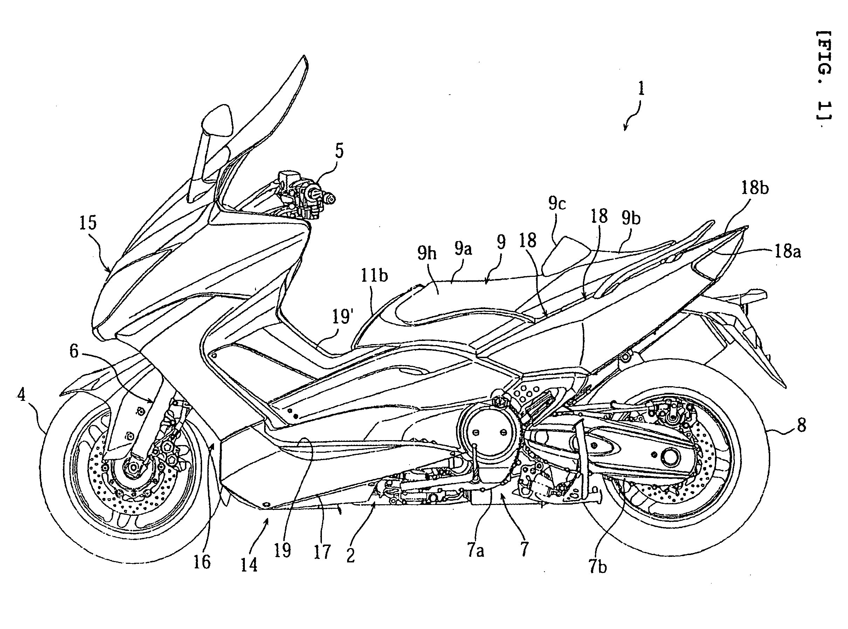

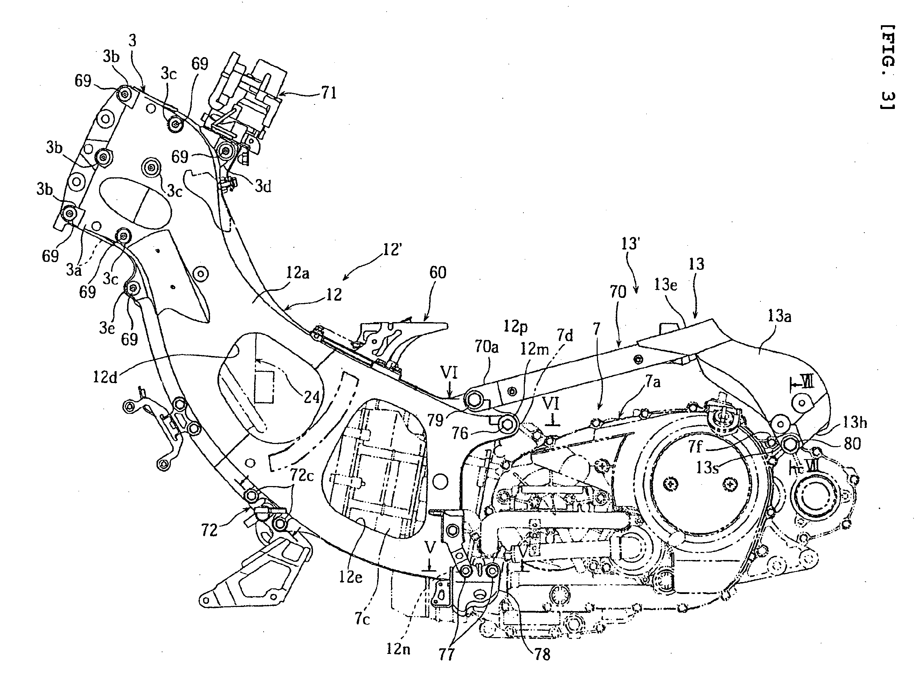

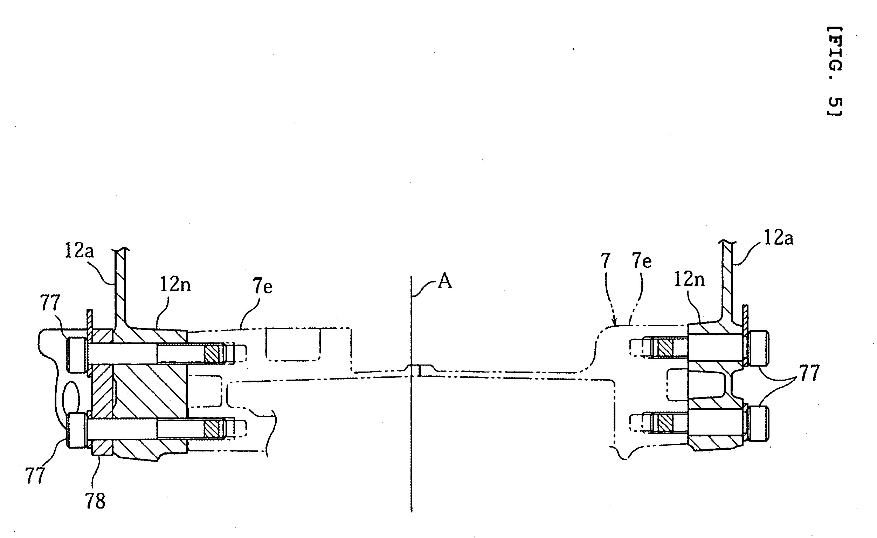

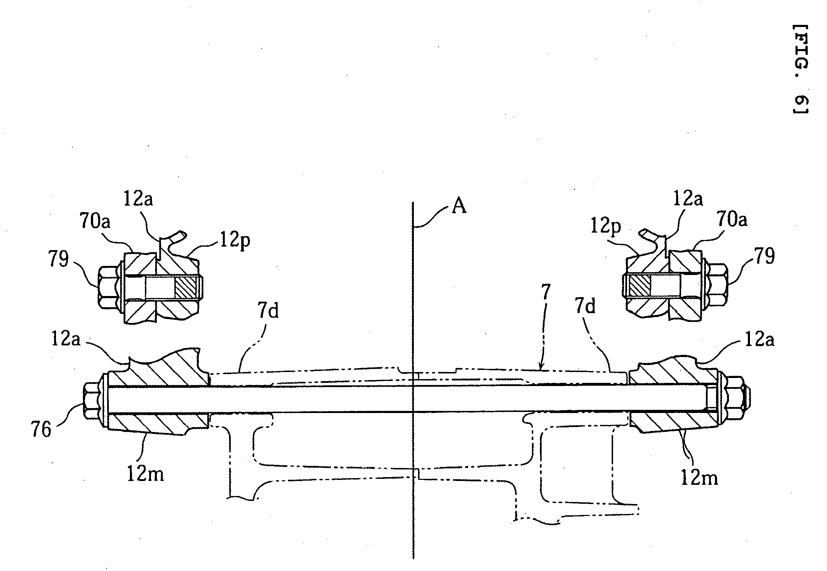

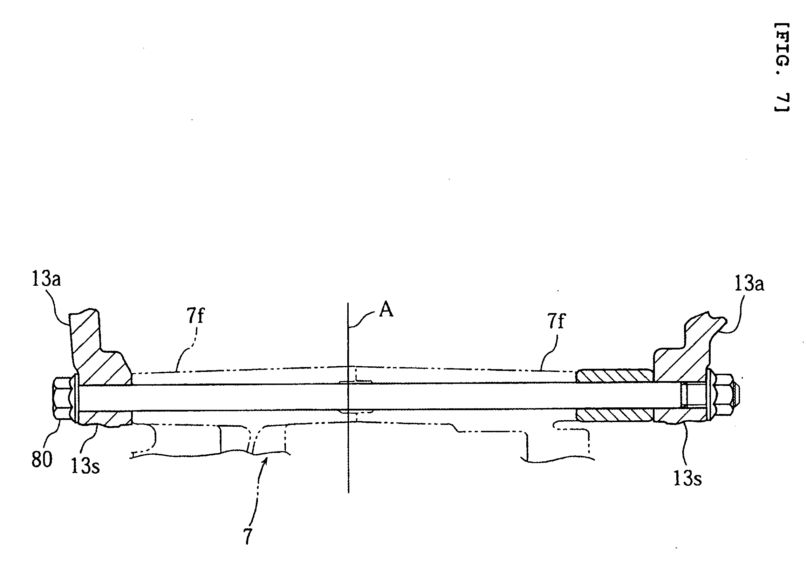

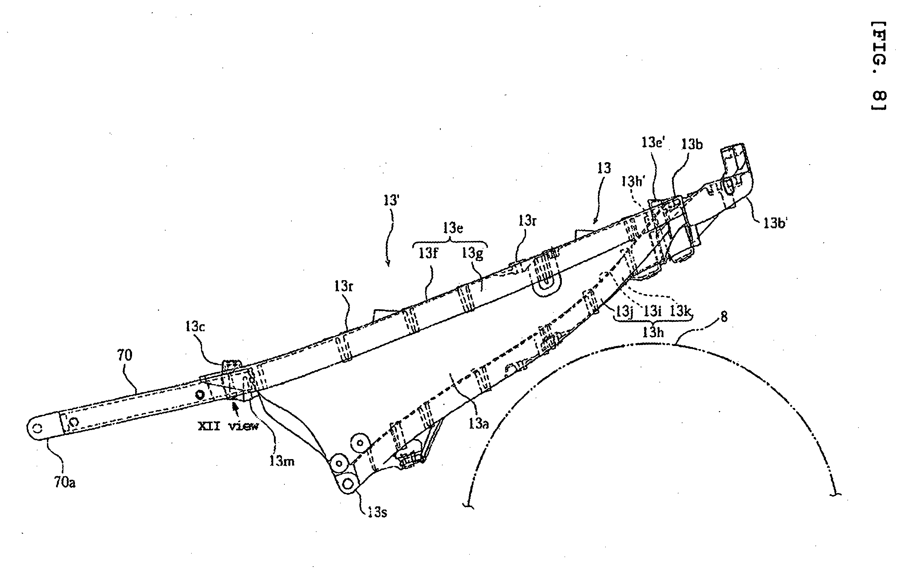

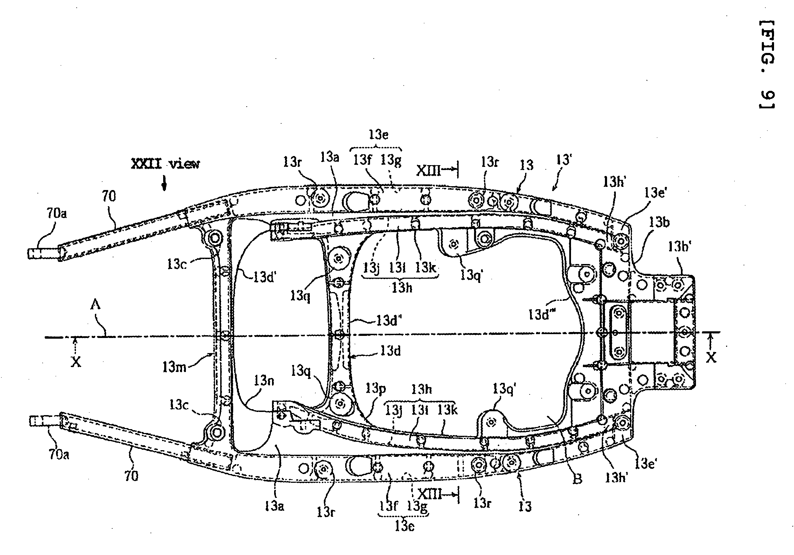

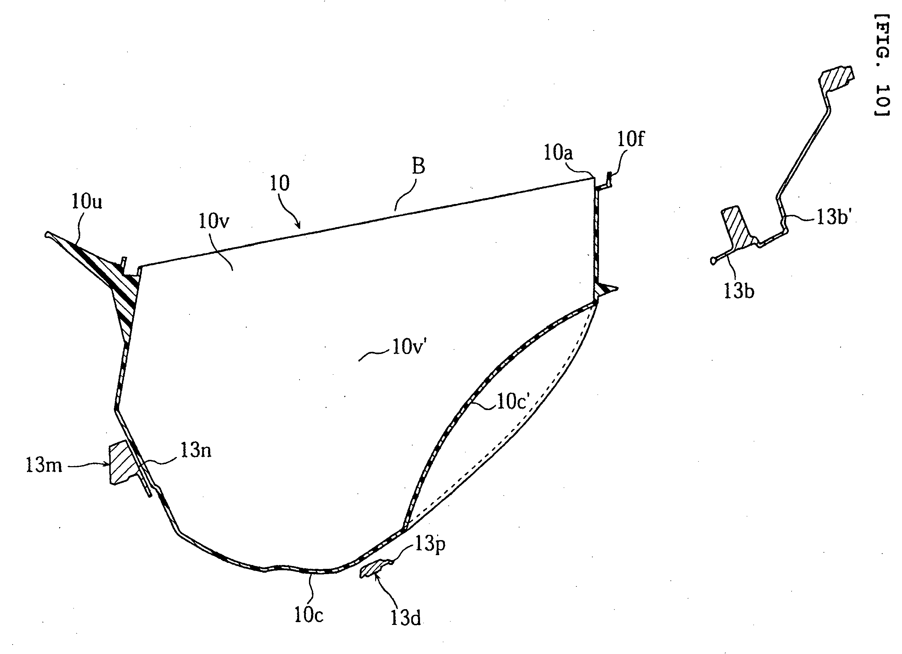

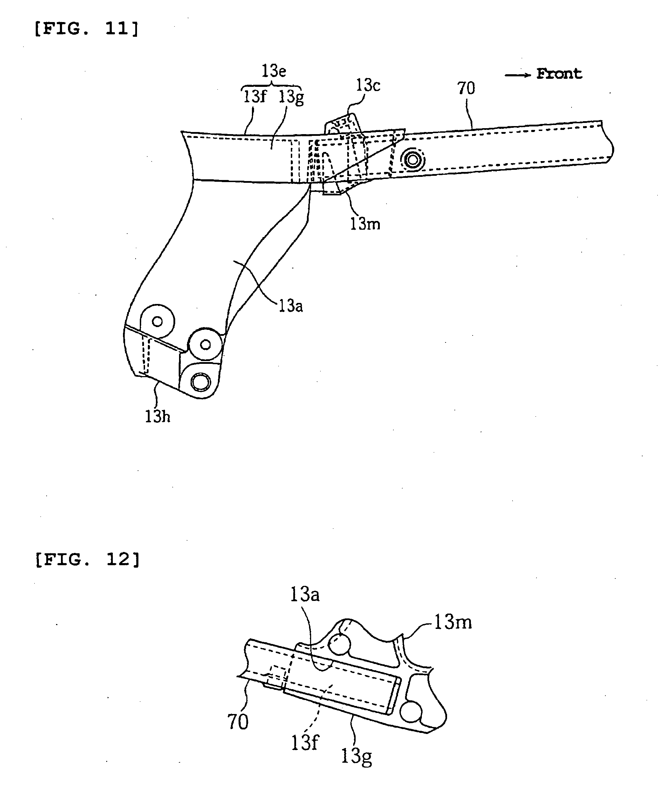

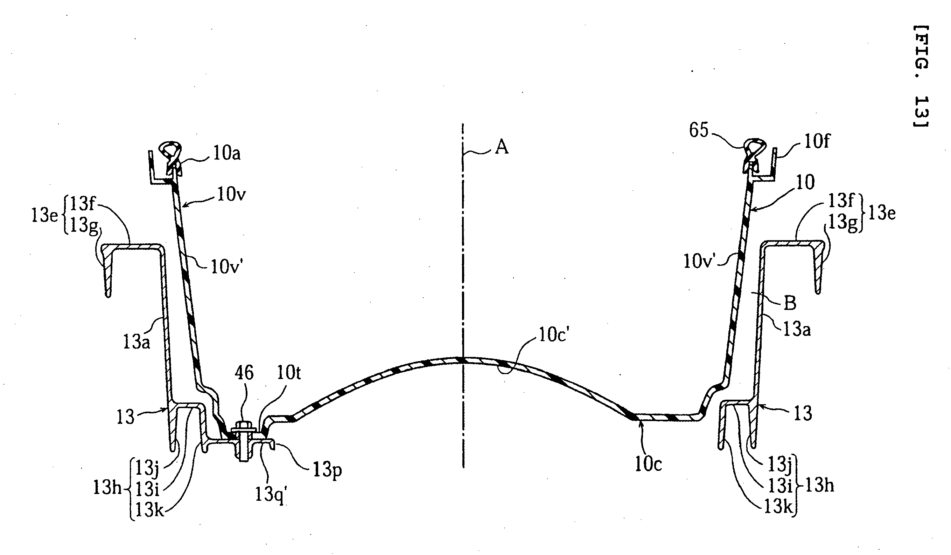

FIGs. 1 to 13 are drawings for describing a motorcycle according to an embodiment. The terms front and rear, and left and right used in the embodiment refer to those viewed from a seated rider unless otherwise specified.

In the figures, reference numeral 1 denotes a scooter-type motorcycle. The motorcycle 1 includes: an underbone type body frame 2; a front fork 6 supported by a head pipe 3 positioned at the front end of the body frame 2 for steering left and right, the front fork 6 supporting a front wheel 4 at its lower end and having a handlebar 5 at its upper end; an engine unit 7 mounted on the approximate center of the body frame 2 in a longitudinal direction, the engine unit 7 supporting a rear wheel 8 at its rear end; and a straddle-type seat 9 for two passengers mounted above the engine unit 7 on the body frame 2.

The body frame 2 includes: the head pipe 3; a front frame 12' having left and right front frame sections 12, 12 extending obliquely downward to the rear of the vehicle from the head pipe 3; and a rear frame 13' having left and right rear frame sections 13, 13 connected to the left and right front frame sections 12, the left and right rear frame sections 13, 13 extending obliquely upward to the rear.

The engine unit 7 has an engine body 7a fixed to the body frame 2, and a transmission case 7b, supported by the engine body 7a in a vertically swingable manner, for transmitting engine power to the rear wheel 8 rotatably supported by the rear end of the engine body 7a.

The body frame 2 is enclosed by a resinous body cover 14. The body cover 14 includes: a front cover 15 for covering the left, right, and front sides of the front fork 6; a leg shield 16, disposed at the rear of the front cover 15, for covering a part in front of a rider's leg; left and right side covers 18, 18 for covering a surrounding part below the seat 9 and left and right sides of the engine body 7a; and left and right under covers 17, 17 for covering a portion from the lower side of the side cover 18 to the leg shield 16. Further, left and right low footboards 19, 19 constructing footrests for the rider are disposed on top of the left and right under covers 17. A center tunnel section 19' swelling upward in a tunnel shape is formed between the left and right footboards 19, 19.

The head pipe 3 and the left and the right front frame sections 12, 12 are integrally formed by casting. The left and the right front frame sections 12, 12 have wide left and right sidewall sections 12a, 12a extending in the longitudinal direction of a vehicle and in a vertical direction. The head pipe 3 has left and the right head pipe halves 3a, 3a connected to and formed integrally with the left and right sidewall sections 12a, 12a, and has a structure that the left and the right head pipe halves 3a, 3a are securely connected with each other by a bolt.

Left and right front coupling boss sections 3b, 3b are formed at front edges of the left and the right head pipe halves 3a, 3a. Left and right rear coupling boss sections 3c, 3c are formed at rear edges of the left and the right head pipe halves 3a, 3a. Further, left and right upper separated coupling boss sections 3d, 3d are formed at upper edges of the left and the right sidewall sections 12a separated rearward from the left and the right rear coupling boss sections 3c. Left and right lower separated coupling boss sections 3e, 3e are formed at lower edges of the left and the right sidewall sections 12a.

The left and the right front coupling boss sections 3b, 3b, the left and the right rear coupling boss sections 3c, 3c, the left and the right upper separated coupling boss sections 3d, 3d, and the left and the right lower separated coupling boss sections 3e, 3e are respectively tightened by coupling bolts 69. A main switch 71 is disposed on top surfaces of the left and the right upper separated coupling boss sections 3d, 3d.

The left and the right sidewall sections 12a, 12a cover a cylinder head 7c of the engine unit 7 from the left and the right sides, and cover an air cleaner 24 disposed forward of the engine unit 7 from the left and the right sides.

A front opening 12d extending in the longitudinal direction and in the vertical direction is formed in a portion of each of the left and the right sidewall sections 12a facing the air cleaner 24. A rear opening 12e extending in the longitudinal direction and in the vertical direction is formed in a portion of each of the left and the right sidewall sections 12a facing the cylinder head 7c. The maintenance of an intake system including the air cleaner 24 can be performed from the front openings 12d, and the maintenance around the cylinder head 7c can be performed from the rear openings 12e.

The upper edges of the left and the right sidewall sections 12a, 12a are coupled by an upper cross member 60 extending in a vehicle width direction. Also, the lower edges of the left and the right sidewall sections 12a are coupled by a lower cross member 72 extending in the vehicle width direction.

Left and right upper suspension boss sections 12m, 12m are formed at upper rear end edges of the left and the right sidewall sections 12a, 12a. Upper suspension sections 7d formed on an upper wall of a crankcase of the engine unit 7 are connected to the left and the right upper suspension boss sections 12m by bolts 76.

Left and right lower suspension boss sections 12n, 12n are formed at lower rear end edges of the left and the right sidewall sections 12a, 12a. Lower suspension sections 7e formed on a bottom wall of the crankcase of the engine unit 7 are connected to the left and the right lower suspension boss sections 12n by pairs of front and rear bolts 77, 77.

On the outside of the left lower suspension boss section 12n, a side stand bracket 78 is securely fixed together therewith by the bolts 77.

The rear frame 13' has: the left and the right rear frame sections (frame sections) 13, 13; a front cross wall section 13m and a rear cross wall section 13b for respectively connecting upper front edges and upper rear edges of the rear frame sections 13, 13 with each other; and a middle cross wall section 13d for connecting lower edges of the rear frame sections 13, 13 with each other. The rear frame 13' is integrally formed by casting.

The left and the right rear frame sections 13, 13 have left and the right sidewalls 13a, 13a, each having a relatively large plane expanding in the vertical and longitudinal directions. Each of the left and the right sidewalls 13a, 13a is formed generally in a triangle shape whose vertical dimension gets smaller toward the rear in the longitudinal direction of the vehicle when viewed from the side of the vehicle. When the left and the right rear frame sections 13, 13 are viewed from a cross-section perpendicular to a vehicle centerline A extending in the longitudinal direction of the vehicle, the left and the right sidewalls 13a, 13a are formed such that a distance therebetween in the vehicle width direction gradually gets longer from the bottom to the top. A storage space B is formed with the left and right sidewalls 13a, 13a, the front cross wall section 13m, the middle cross wall section 13d, and the rear cross wall section 13b. As described later, a storage box 10 is placed within the storage space B, and an upper end opening 10a of the storage box 10 is opened and closed by the seat 9.

The cross wall section 13m for connecting the upper front edges of the left and the right rear frame sections 13, 13 with each other is in a rod shape, and boss sections 13c, 13c are formed to project upward on left and right ends of the cross wall section 13m. Left and right rear ends of a fuel tank 11 are securely fixed to the boss sections 13c, 13c by bolts 11c.

A seat support section 13b' is formed on the rear cross wall section 13b for connecting the upper rear end edges of the left and the right rear frame sections 13, 13 with each other. A hinge member 50 is attached to the sear support section 13b', and a taillight mounting bracket 51 is also attached to the seat support section 13b' to project rearward.

When viewed from the cross-section, upper edge sections 13e, 13e, and lower edge sections 13h, 13h of the left and the right sidewalls 13a, 13a are formed in full of each sidewall 13a length in the longitudinal direction. A vertical distance between the upper edge section 13e and the lower edge section 13h gets shorter to the rear in the longitudinal direction of the vehicle, and the height of the upper edge section 13e and that of the lower edge section 13h become the same in the cross wall section 13b.

Each of the upper edge sections 13e has a first horizontal side 13f obliquely extending from the upper edge of each sidewall 13a to the outside in the vehicle width direction and a first vertical side 13g obliquely extending downward at an approximately right angle from an outer edge of the first horizontal side 13f, and is in an upside-down U shape in cross-section.

Each of the lower edge sections 13h has a second horizontal side 13i obliquely extending from the lower edge of each sidewall 13a to the inside in the vehicle width direction, a second inside vertical side 13k obliquely extending downward at an approximately right angle from an inner edge of the first horizontal side 13i, and a second outside vertical side 13j extending downward from the lower edge of the sidewall 13a to form a continuous surface. Each of the lower edge sections 13h is in the upside-down U shape in cross-section.

When viewed from the above, the left and the right lower edge sections 13h are positioned inside the upper edge sections 13e in the vehicle width direction and are unsymmetrical. Specifically, the left lower edge section 13h is curved to extend into the inside in the vehicle width direction, as it gets close to the front side from the rear side. Meanwhile, the right lower edge section 13h is formed generally in a linear shape. Also, the left and the right lower edge sections 13h are tilted upward to the rear when viewed from the side, and a rear end section 13h' of each upper edge section 13h is positioned to be overlapped with an inner side of a rear end section 13e' of the upper edge section 13e in the vehicle width direction.

A front opening 13n is formed with the left and the right rear frame sections 13, 13, the front cross wall section 13m, and the middle cross wall section 13d. Also, a rear opening 13p is formed with the left and the right rear frame sections 13, 13, the middle cross wall section 13d, and the rear cross wall section 13b. Both ends of the rear cross wall section 13b in the vehicle width direction extend forward of the vehicle, and front ends thereof are positioned near the middle of the rear opening 13p in the longitudinal direction.

Box bottom section mounting seats 13q, 13q are formed on both ends of the middle cross wall section 13d in the vehicle width direction. Also, the left and the right front ends of the rear cross wall section 13b are formed with box bottom section mounting seats 13q', 13q'. Both of the bottom section mounting seats 13q', 13q' are displaced in the longitudinal direction. In addition, a pair of front and rear box upper section mounting seats 13r, 13r is formed on the first horizontal side 13f of each of the left and the right upper edge sections 13e.

Angular cylindrical frame members 70, 70 made of extrusions and extending linearly in the longitudinal direction of the vehicle are welded at their rear ends to front ends of the upper edges 13e, 13e of the left and the right rear frame sections 13, 13. The left and the right frame members 70 are inclined inward so that a distance therebetween in the vehicle width direction gets slightly narrower in the front when viewed from above. The left and the right frame members 70 are disposed so as to continue with the upper edges 13e when viewed from the side. Plate coupling brackets 70a, 70a are welded to front ends of the left and the right frame members 70.

The left and the right coupling brackets 70a are coupled to left and right connecting boss sections 12p, 12p formed at the upper rear end edges of the left and the right sidewall sections 12a, 12a of the left and the right front frame sections 12, 12 by bolts 79, 79. The connecting boss section 12p is disposed forward of the upper suspension boss section 12m.

Suspension boss sections 13s, 13s are formed on the front ends of the lower edge sections 13h, 13h of the left and the right rear frame sections 13, 13, and are coupled to a rear suspension section 7f of the engine unit 7 by a bolt 80.

As described above, the left and the right front frame sections 12, 12 are respectively coupled to the left and the right rear frame sections 13, 13 via the engine unit 7. The engine unit 7 of a rigid body configures part of the body frame 2.

The storage box 10 has a capacity large enough to store a helmet or the like therein, and is disposed to be accommodated within the rear frame 13'. The storage box 10 has a cylindrical sidewall 10v extending in the vertical direction and a bottom wall 10c for closing a bottom end of the sidewall 10v. A seal member 65 is attached to an upper end opening 10a of the sidewall 10v, is pressed by a seat bottom plate 9d, and seals a gap with the seat 9. Also, a tub section 10f for discharging water coursing down the seat 9 to the outside is integrally formed on a periphery of the upper end opening 10a.

The upper end opening 10a of the storage box 10 is positioned higher than the upper edges of the left and the right rear frame sections 13. The bottom wall 10c is generally in the same height as the lower edges of the left and right rear frame sections 13, and is provided with a recess 10c' dented upward to avoid the inference with the rear wheel 8.

Left and right sidewalls 10v', 10v' of the sidewall 10v of the storage box 10 are formed to generally follow the inner surfaces of the left and the right sidewalls 13a, 13a of the left and the right rear frame sections 13, 13. That is, a distance between the left and the right sidewalls 10v', 10v' in the vehicle width direction increases from the bottom to the top.

Large portions of the left and the right sidewalls 13a, 13a of the left and the right rear frame sections 13, 13 respectively overlap with the left and the right sidewalls 10v', 10v' of the storage box 10 when viewed from the side of the vehicle.

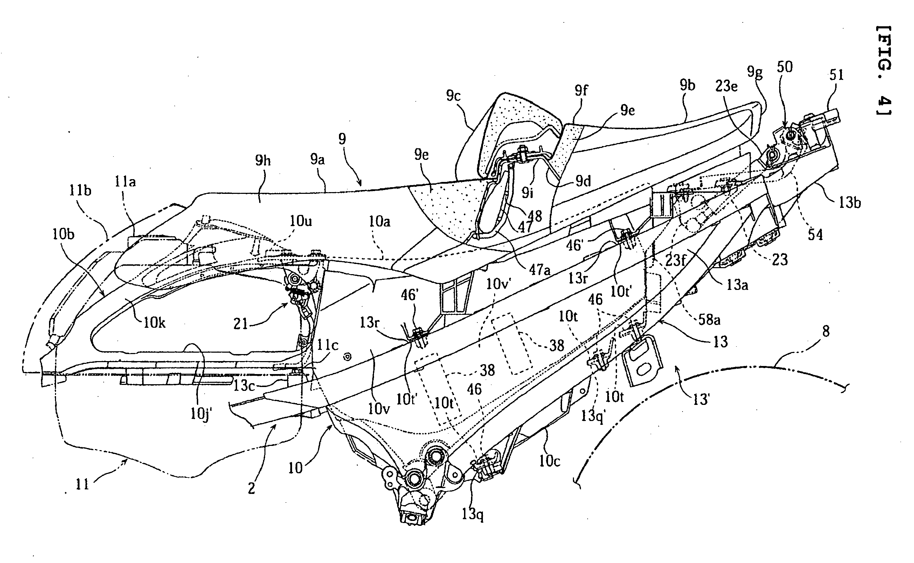

A contacting section where the front portions of the left and the right sidewalls 13a respectively contact the left and the right sidewall 10v', 10v' of the storage box is formed therebetween. Each contacting section is made up by interposing a pair of front and rear elastic members 38, 38 made up of rubber sheets and the like between the left and the right sidewalls 13a and the left and the right sidewalls 10v' (see FIG. 4).

A bottom section mounting seat 10t formed in the bottom wall 10c of the storage box 10 is fixed to the box bottom section mounting seats 13q, 13q' by bolts 46. Mounting seats 10t' formed on left and right outer walls are fixed to the box upper section mounting seats by bolts 46'.

As shown in FIG. 4, a front seat 9a for the rider and a rear seat 9b for a tandem rider are integrally formed as the seat 9. The seat 9 is constructed that a seat cushion 9e is placed on top of the resinous seat bottom plate 9d, and that an outer surface of the seat cushion 9e is covered by an outer cover 9f. When viewed from the side, the rear seat 9b is positioned slightly higher than the front seat 9a.

The front-left and front-right sides of the front seat 9a are formed with narrowed sections 9h, 9h to make the dimension of the front portion narrower than the rear portion in the vehicle width direction. Accordingly, the rider can put his or her feet on the ground easily and stably.

A backrest 9c for supporting the rider's lower back is disposed on a border between the front seat 9a and the rear seat 9b. A storage section 9i is formed under the backrest 9c by bulging part of the seat bottom plate 9d upward. In the storage section 9i, a tool kit 47 and a helmet hunger 48 are stored and secured by a rubber band 47a.

A hinge arm 54 fixed to the rear end of the seat 9 is supported by the seat support section 13b' of the left and the right rear frame sections 13 via a hinge member 50. This allows the seat 9 to swing vertically, and to open and close the upper end opening 10a of the storage box 10.

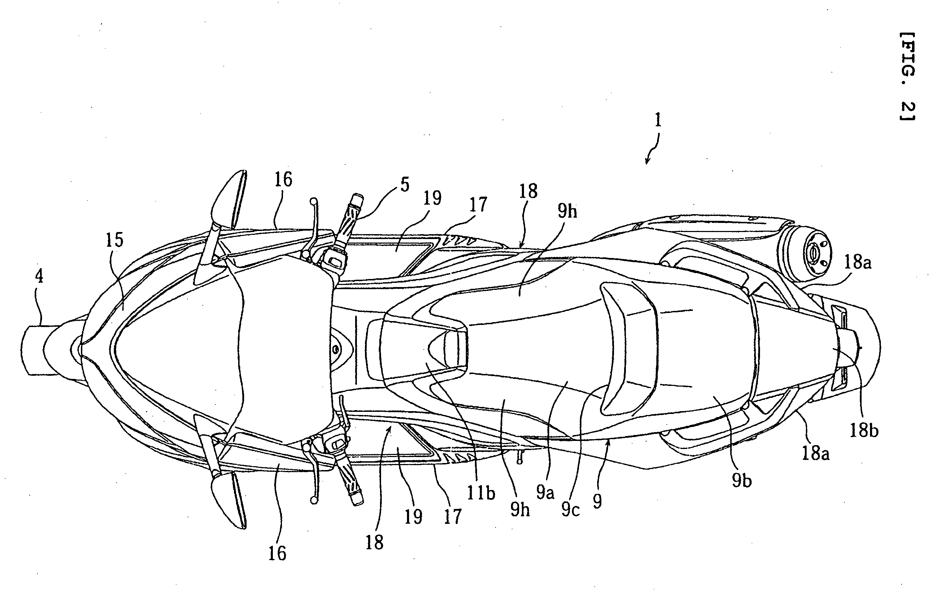

The seat support section 13b', the hinge arm 54, and the hinge member 50 are covered with rear end sections 18a, 18a of the left and the right side covers 18 and a tail cover 18b disposed between upper ends of the left and the right rear end sections 18a (see FIGs. 1 and 2).

Left and right dampers 23, 23 for applying urging force to the seat 9 in its opening direction are respectively disposed between the left and the right rear frame sections 13, 13 and the seat 9. The left and the right dampers 23 are a stroke type for generating the axial urging force, and are arranged on both left and right sides in the vehicle width direction to face the longitudinal direction of the vehicle.

A load-receiving member 10b for receiving load of the rider applied to the seat 9 is disposed in front of the storage box 10, and is integrally formed with the storage box 10 to extend forward.

The load-receiving member 10b is in an approximate bowl shape following the outer surface of the fuel tank 11, and is attached to the body frame 2 so as not to contact with the fuel tank 11.

Left and right seat lock mechanisms 21, 21 for locking the seat 9 in its fully closed position are disposed between the storage box 10 and the load-receiving member 10b.

The bottom wall 10c of the storage box 10 is disposed to cover the front opening 13n and the rear opening 13p of the left and the right rear frame sections 13. The bottom wall 10c faces an upper edge of the rear wheel 8 especially via the rear opening 13p, and the facing portion of the bottom wall 10c with the rear wheel 8 is formed with a recess 10c' dented upward to avoid the interference with the rear wheel 8 at the maximum stroke position.

The storage box 10 is disposed below the seat 9 in the body frame 2, and the fuel tank 11 is disposed in front of the storage box 10.

The fuel tank 11 is mounted on the upper side of the engine body 7a in the body frame 2. A fuel cap 11 a for opening and closing a fuel inlet is attached to an upper wall of the fuel tank 11. The fuel cap 11 a is exposed from above by tilting a lid 11 b forward about its bottom edge, the lid 11 b being located on the forward side of the seat 9.

In this embodiment, the left and right side walls 13a, 13a are formed such that the distance therebetween in the vehicle width direction gets longer to the top when viewed from the cross-section perpendicular to the vehicle centerline A. The storage space B is formed between the left and the right side walls 13a, and the storage box 10 is disposed inside the storage space B; therefore, it is possible to enlarge a capacity.

Also, because the rear frame 13' is an integrally casting component, it can be manufactured easily in comparison with a case that plural parts are jointed by welding. In addition, it is possible to reduce the number of parts as well as that of assembly steps.

In this embodiment, the upper edge sections 13e, 13e of the upside-down U shape are formed on the left and the right rear frame sections 13, and are formed in full length of the rear frame sections 13; therefore, the rigidity of the upper edges of the left and the right rear frame sections 13 can be heightened.

In addition, each of the left and the right upper edge sections 13e is in the upside-down U shape in cross-section with the first horizontal side 13f extending from each of the left and the right side wall 13a and the first vertical side 13g obliquely extending downward from the outer edge of the first horizontal side 13f. Therefore, it is possible to surely improve the rigidity of the upper edges of the left and right rear frame sections 13.

In this embodiment, the lower edge sections 13h, 13h of the upside-down U shape are formed on the left and right sidewalls of the left and the right rear frame sections 13, and are formed in full length of the rear frame sections 13; therefore, the rigidity of the bottoms of the left and the right rear frame sections 13 can be improved.

Each of the left and the right lower edge sections 13h is in the reverse U shape in cross-section with the second horizontal side 13i obliquely extending inward, and the outside and the inside vertical sides 13j, 13k obliquely extending downward from both edges of the second horizontal side 13i in the vehicle width direction. Therefore, it is possible to surely improve the rigidity of the bottoms of the left and the right rear frame sections 13.

In this embodiment, the left and the right frame members 70, 70, which are made of the extrusions extending in the longitudinal direction, are welded to the front ends of the left and the right rear frame sections 13. Therefore, the rear frame sections 13 can be small in size, and the complexity of the molds can be prevented in comparison with a case in which the left and the right frame members 70 are integrally formed with the left and the right rear frame sections 13 by casting, respectively.

Here, in this embodiment, the frame members 70 made of the extrusions are connected to the front ends of the left and the right rear frame sections 13; however, the embodiment includes a case in which a frame member is joined with a rear end of a rear frame section.

In this embodiment, the storage box 10 is placed in the storage space B between the left and the right sidewalls 13a, 13a. The distance between the left and the right sidewalls 10v', 10v' of the sidewall 10v of the storage box 10 is designed to get longer as it moves upward. Therefore, it is possible to increase the storing capacity of the storage box 10, and a large-sized object such as a helmet can be stored therein. Also, because the area of the storage box 10 gets larger as it moves to the upper opening 10a side, the upper opening 10a does not interfere with taking in and out of load. Therefore, it is possible to improve the property of the storage box 10 associated with taking in and out the load.

The elastic members 38, 38 are respectively interposed between the left and the right sidewalls 13a and the left and the right sidewalls 10v' of the storage box 10, and thus, the elastic members 38 can absorb vibrations from the body frame 2, and it is possible to prevent vibrations from transmitting to the passengers via the storage box 10.

The elastic members 38 are respectively in contact with the left and the right sidewalls 13a of the left and right frame sections 13 and the left and the right sidewalls 10v' of the storage box 10; therefore, it is possible to suppress the vibration of the left and the right frame sections 13, 13, and to reduce the noise. In other words, a storage space can be effectively increased by thinning the left and the right frame sections 13, 13 without enlarging the width dimension of the whole vehicle. However, thinning in such a case can be a cause of the noise as the thinned sidewalls change the vibration to sound. In this embodiment, this problem can be prevented due to the interposition of the elastic members 38. Also, the interposition of the elastic members 38 can suppress deformation of the sidewalls of the storage box 10 and its vibration. Consequently, it is possible to reduce the rigidity required for the storage box itself.

In this embodiment, the contacting section is formed by interposing the elastic member 38; however, a contacting section of the embodiment can be formed by substantially contacting a rear frame with a storage box. For example, it is possible to have a structure that a boss section or a rib section is formed on the outer wall of the storage box and is in contact with the rear frame. On the contrary, it is possible to have a structure that the boss section or the rib section is formed on left and right sidewalls of the rear frame, and is in contact with the storage box.

In this embodiment, the front opening 13n and the rear opening 13p are formed in the cross wall sections of the left and the right rear frame sections 13, and the bottom wall 10c of the storage box 10 faces the upper edge of the rear wheel 8 via each opening 13n, 13p. Therefore, the bottom wall 10c of the storage box 10 can be positioned close to the rear wheel 8 at its maximum stroke position by utilizing the front opening 13n and the rear opening 13p, the storing capacity can be increased, and the bottom wall 10c can function as a mud flap.

In this embodiment, because the storage box 10 is supported by the box upper section mounting seats 13r formed on the upper folded sections 13e with high rigidity, it is possible to increase the support strength of the storage box 10 and thus to store a heavy object therein.

In this embodiment, the rear end of the seat 9 is supported by the seat support section 13b' formed in the rear ends of the left and the right rear frame sections 13, and the upper opening 10a of the storage box 10 is made openable and closable by the seat 9. Therefore, the angle of the seat 9 at its fully opened position can be greater.

Also, in this embodiment, it is described that the storage box 10 is placed in the storage space B formed between the left and the right side walls 13a; however, in the embodiment, it is possible that the storage space B itself functions as a storage box.

In this embodiment, it is described that the rear frame sections are integrally formed by casting; however, the rear frame sections of the embodiment can be made of sheet metal.

Also, in this embodiment, it is described that the horizontal sides and the vertical sides for constituting the upper edge sections and the lower edge sections are folded at an approximate right angle; however, in the embodiment, it is possible to have a constitution that the horizontal sides and the vertical sides to have a gentle curvature.

In addition, in this embodiment, it is described that the distance between the left and the right sidewalls of the rear frame sections gradually gets longer to the top; however the left and the right sidewalls of the embodiment can be formed with steps such that the upper side is wider than the lower side.

The description above discloses (amongst others) an embodiment of a motorcycle comprising: a body frame having left and right frame sections, both extending In a longitudinal direction of the motorcycle; the left frame section having a left sidewall, and the right frame section having a right sidewall, In an upper area of the sidewalls a distance between the left and right sidewalls In a width direction of the motorcycle being greater than In a lower area of the sidewalls; a storage space being formed between the left and right sidewalls; and the left and right frame sections each having a first horizontal side extending outwardly in the width direction of the motorcycle from an upper edge of each of the left and right sidewalls, the left and right frame sections each have a second horizontal side extending Inwardly in the width direction of the motorcycle from a lower edge of each of the left and right sidewalls.

in such a motorcycle, a left and a right frame sections are formed with a left and a right sidewalls. A distance between the left and the right sidewalls in a vehicle width direction gets longer to the top, and a storage space is formed therebetween; therefore, a storing capacity can be enlarged as the distance between the left and the right sidewalls increases. In this case, because the distance between the left and the right sidewalls gets longer to the top, opening for taking in and out of a stored object does not Interfere when the stored object is taken In and out. Therefore, it is possible to secure the property associated with taking in and out of the stored object.

Preferably, the left and the right frame sections are integrally formed by casting.

Further, the left and the right frame sections each have a first horizontal side extending outward in the vehicle width direction from an upper edge of each of the left and right sidewalls.

Still further, preferably the first horizontal side extends in the longitudinal direction of the vehicle.

Also, preferably an upper edge of each of the left and the right frame sections is in an upside-down U shape in cross-section with the first horizontal side extending outward in the vehicle width direction and a first vertical side extending downward from the first horizontal side.

The left and the right frame sections each have a second horizontal side extending inward in the vehicle width direction from an lower edge of each of the left and right sidewalls when viewed from the cross-section.

Preferably, the second horizontal side extends in the longitudinal direction of the vehicle.

Preferably, a lower edge of each of the left and the right frame sections is in the upside-down U shape in cross-section with the second horizontal side extending inward in the vehicle width direction and a pair of second vertical sides extending downward from the second horizontal side.

Also, preferably a frame member made of an extrusion extending in the longitudinal direction of the vehicle is welded to an upper end or a rear end of each of the left and the right frame sections.

A storage box is placed in the storage space between the left and the right sidewalls of the left and the right frame sections.

Preferably, the left and the right sidewalls of the left and the right frame sections partially overlap with part of the storage box when viewed from a side of the vehicle.

The motorcycle further comprises a contacting section for substantially contacting: the left sidewall of the left frame section with a left sidewall of the storage box; and the right sidewall of the right frame section with a right sidewall of the storage box.

Still further, preferably the contacting section is constituted by interposing an elastic member between the left sidewall of the left frame section and the left sidewall of the storage box, and between the right sidewall of the right frame section and the right sidewall of the storage box.

Preferably, the left and the right frame sections are connected with a cross wall section extending in the vehicle width direction, an opening is formed in the cross wall section, and a bottom wall of the storage box faces an upper edge of a rear wheel via the opening.

Preferably, the left and the right frame sections each have the first horizontal side extending outward from the upper edge of each of the left and the right sidewalls in the vehicle width direction, and the storage box is attached to a mounting seat formed on the first horizontal side.

According to another preferred aspect, a seat support section is formed on the left and the right frame sections, and the seat support section supports a seat for making the storage space openable and closable via a hinge.

According to another preferred aspect, the distance between the left sidewall and the right sidewall gradually changes by increasing to the top.

In order to provide a motorcycle for suppressing widening of a vehicle width dimension of an overall vehicle body and for enlarging a storing capacity between left and right frame sections, the description above discloses a vehicle comprising, when viewed from a cross-section perpendicular to a vehicle centerline A extending in a longitudinal direction of the vehicle, left and right rear frame sections 13, 13 having left and right sidewalls 13a, 13a, wherein a distance therebetween in a vehicle width direction increases to the top. A storage space B is formed between the left and the right sidewalls 13a, 13a.

## Claims

1. Motorcycle comprising:
a body frame (2) having left and right frame sections (13), both extending in a longitudinal direction of the motorcycle;
the left frame section (13) having a left sidewall (13a), and the right frame section (13) having a right sidewall (13a), in an upper area of the sidewalls (13a) a distance between the left and right sidewalls (13a) in a width direction of the motorcycle being greater than in a lower area of the sidewalls (13a);
a storage space (B) being formed between the left and right sidewalls (13a); and
the left and right frame sections (13) each having a first horizontal side (13f) extending outwardly in the width direction of the motorcycle from an upper edge of each of the left and right sidewalls (13a), and
the left and right frame sections (13) each have a second horizontal side (13i) extending inwardly in the width direction of the motorcycle from a lower edge of each of the left and right sidewalls (13a),
**characterized in that**
a storage box (10) is placed in the storage space (B) between the left and right sidewalls (13a) of the left and right frame sections (13), and
contacting sections are provided where the left sidewall (13a) of the left frame section (13) contacts a left sidewall (10v') of the storage box (10) and the right sidewall (13a) of the right frame section (13) contacts a right sidewall (10v') of the storage box (10).

2. Motorcycle according to claim 1, **characterized in that** the left and right frame sections (13) are integrally formed castings.

3. Motorcycle according to claim 1 or 2, **characterized in that** the first horizontal side (13f) and/or the second horizontal side (13i) extend in the longitudinal direction of the motorcycle.

4. Motorcycle according to one of the claims 1 to 3, **characterized in that** the upper edge of each of the left and right frame sections (13) has a substantially upside-down U shape in cross-section with the first horizontal side (13f) extending outwardly in the width direction of the motorcycle and a first vertical side (13g) extending downwardly from the first horizontal side (13f).

5. Motorcycle according to one of the claims 1 to 4, **characterized in that** the lower edge of each of the left and right frame sections (13) has a substantially upside-down U shape in cross-section with the second horizontal side (13i) extending inwardly in the width direction of the motorcycle and a pair of second vertical sides (13j,13k) extending downwardly from the second horizontal side (13i).

6. Motorcycle according to one of the claims 1 to 5, **characterized in that** at least a frame member (70) is welded to a front end and/or a rear end of the left and right frame sections (13).

7. Motorcycle according to claim 6, **characterized in that** the frame member (70), which is welded to the front end and/or the rear end of the left and right frame sections (13), is an extrusion member extending in the longitudinal direction of the motorcycle.

8. Motorcycle according to claim 1, **characterized in that** the left and right sidewalls (13a) of the left and right frame sections (13) at least partially overlap with a portion of the storage box (10) when viewed from a side of the motorcycle.

9. Motorcycle according to claim 1 or 8, **characterized in that** each contacting section is constituted by interposing an elastic member (38) between the left sidewall (13a) of the left frame section (13) and the left sidewall (10v') of the storage box (10), and between the right sidewall (13a) of the right frame section (13) and the right sidewall (10v') of the storage box (10).

10. Motorcycle according to one of the claims 6 to 9, **characterized in that** the left and right frame sections (13) are connected with at least a cross wall section (13b, 13d, 13m) extending in the width direction of the motorcycle.

11. Motorcycle according to claim 10, **characterized in that** a front opening (13n) is formed with the left and right frame sections (13), a middle cross wall section (13d) and a front cross wall section (13m) and a rear opening (13P) is formed with the left and right frame sections (13), the middle cross wall section (13d) and a rear cross wall section (13b).

12. Motorcycle according to claim 11, **characterized in that** a bottom wall (10c) of the storage box (10) faces an upper edge of a rear wheel (8) of the motorcycle via the rear opening (13p).

13. Motorcycle according to one of the claims 1 or 8 to 12, **characterized in that** the storage box (10) is attached to at least a mounting seat (13r) formed on the first horizontal side (13f) of each of the left and right frame sections (13).

14. Motorcycle according to one of the claims 1 to 13, **characterized in that** at least a seat support section (13b') is formed on the left and right frame sections (13), said seat support section supporting a seat (9) for making the storage space (B) openable and closable via a hinge (50).

15. Motorcycle according to one of the claims 1 to 14, **characterized in that** the distance between the left and right sidewalls (13a) gradually increases towards the upper area of the storage space (B).

## Patentansprüche

1. Motorrad, aufweisend:
einen Karosserierahmen (2), der rechte und linke Rahmenabschnitte (13) hat, die sich beide in einer Längsrichtung des Motorrades erstrecken;
wobei der linke Rahmenabschnitt (13) eine linke Seitenwand (13a) hat und der rechte Rahmenabschnitt (13) eine rechte Seitenwand (13a) hat, wobei in einem oberen Bereich der Seitenwände (13a) ein Abstand zwischen der rechten und linken Seitenwand (13a) in einer Richtung der Breite des Motorrades größer als in einem unteren Bereich der Seitenwände (13a) ist;
einen Stauraum (B), der zwischen der rechten und linken Seitenwand (13a) gebildet ist; und
wobei der rechte und linke Rahmenabschnitt (13) jeweils eine erste horizontale Seite (13f) hat, die sich nach außen in Richtung der Breite des Motorrades von einer oberen Kante von jeder der rechten und linken Seitenwand (13a) erstreckt, und
wobei der rechte und linke Rahmenabschnitt (13) jeweils eine zweite horizontale Seite (13i) hat, die sich nach innen in Richtung der Breite des Motorrades von einer unteren Kante von jeder der rechten und linken Seitenwand (13a) erstreckt,
**dadurch gekennzeichnet, dass**
eine Staubox (10) in dem Stauraum (B) zwischen der rechten und linken Seitenwand (13a) des linken und rechten Rahmenabschnittes (13) angeordnet ist, und wobei Kontaktabschnitte vorgesehen sind, wo die linke Seitenwand (13a) des linken Rahmenabschnittes (13) eine linke Seitenwand (10v') der Staubox (10) berührt und die rechte Seitenwand (13a) des rechten Rahmenabschnittes (13) eine rechte Seitenwand (10v') der Staubox (10) berührt.

2. Motorrad nach Anspruch 1, **dadurch gekennzeichnet, dass** der linke und rechte Rahmenabschnitt (13) einstückig gebildete Gußstücke sind.

3. Motorrad nach Anspruch 1 oder 2, **dadurch gekennzeichnet, dass** sich die erste horizontale Seite (13f) und / oder die zweite horizontale Seite (13i) in der Längsrichtung des Motorrades erstrecken.

4. Motorrad nach einem der Ansprüche 1 bis 3, **dadurch gekennzeichnet, dass** die obere Kante von jedem des linken und rechten Rahmenabschnittes (13) eine im Wesentlichen umgekehrte U- Form im Querschnitt hat, wobei sich die erste horizontalen Seite (13f) in Richtung der Breite des Motorrades nach außen erstreckt, und eine erste vertikale Seite (13g) hat, die sich nach unten von der ersten horizontalen Seite (13f) erstreckt.

5. Motorrad nach einem der Ansprüche 1 bis 4, **dadurch gekennzeichnet, dass** die untere Kante jedes des linken und rechten Rahmenabschnittes (13) eine im Wesentlichen umgekehrte U- Form im Querschnitt hat, wobei sich die zweite horizontale Seite (13i) in Richtung der Breite des Motorrades nach innen erstreckt, und ein Paar von zweiten vertikalen Seiten (13j, 13k) hat, das sich nach unten von der zweiten horizontalen Seite (13i) erstreckt.

6. Motorrad nach einem der Ansprüche 1 bis 5, **dadurch gekennzeichnet, dass** zumindest ein Rahmenteil (70) mit einem vorderen Ende und / oder einem hinteren Ende des linken und rechten Rahmenabschnittes (13) verschweißt ist.

7. Motorrad nach Anspruch 6, **dadurch gekennzeichnet, dass** das Rahmenteil (70), das mit einem vorderen Ende und / oder dem hinteren Ende des linken und rechten Rahmenabschnittes (13) verschweißt ist, ein Extrudierteil ist, das sich in der Längsrichtung des Motorrades erstreckt.

8. Motorrad nach Anspruch 1, **dadurch gekennzeichnet, dass** die linke und rechte Seitenwand (13a) des linken und rechten Rahmenabschnittes (13) zumindest teilweise mit einem Abschnitt der Staubox (10) überlappen, wenn von einer Seite des Motorrades gesehen.

9. Motorrad nach Anspruch 1 oder 8, **dadurch gekennzeichnet, dass** jeder Kontaktabschnitt durch Einsetzen eines elastischen Teils (38) zwischen die linke Seitenwand (13a) des linken Rahmenabschnittes (13) und die linke Seitenwand (10v') der Staubox (10) und zwischen die rechte Seitenwand (13a) des rechten Rahmenabschnittes (13) und die rechte Seitenwand (10v') der Staubox (10) gebildet ist.

10. Motorrad nach einem der Ansprüche 6 bis 9, **dadurch gekennzeichnet, dass** der linke und rechte Rahmenabschnitt (13) mit einem Querwandabschnitt (13b, 13d, 13m) verbunden ist, der sich in Richtung der Breite des Motorrades erstreckt.

11. Motorrad nach Anspruch 10, **dadurch gekennzeichnet, dass** eine vordere Öffnung (13n) mit dem linken und rechten Rahmenabschnitt (13), einem mittleren Querwandabschnitt (13d) und einem vorderen Querwandabschnitt (13m) gebildet ist und zumindest eine hintere Öffnung (13p9 mit dem linken und rechten Rahmenabschnitt (13), dem mittleren Querwandabschnitt (13d) und einem hinteren Querwandabschnitt (13b) gebildet ist.

12. Motorrad nach Anspruch 11, **dadurch gekennzeichnet, dass** sich eine Bodenwand (10c) der Staubox (10) einer oberen Kante eines Hinterrades (8) des Motorrades über die hintere Öffnung (13p) zugewandt ist.

13. Motorrad nach einem der Ansprüche 1 oder 8 bis 12, **dadurch gekennzeichnet, dass** die Staubox (10) mit zumindest einem Montagesitz (13r), gebildet auf der ersten horizontalen Seite (13f) von jedem des linken und rechten Rahmenabschnittes (13), verbunden ist.

14. Motorrad nach einem der Ansprüche 1 bis 13, **dadurch gekennzeichnet, dass** zumindest ein Sitztragabschnitt (13b') auf dem linken und rechten Rahmenabschnitt (13) gebildet ist, wobei der Sitztragabschnitt einen Sitz (99 trägt, um den Stauraum (B) über ein Gelenk (50) öffnen oder schließen zu können.

15. Motorrad nach einem der Ansprüche 1 bis 14, **dadurch gekennzeichnet, dass** sich der Abstand zwischen der linken und rechten Seitenwand (13a) allmählich in Richtung zu dem oberen Bereich des Stauraums (B) erhöht.

## Revendications

1. Motocyclette comprenant :
un cadre (2) comportant des sections de cadre de gauche et de droite (13), s'étendant toutes deux dans le sens longitudinal de la motocyclette ;
la section de cadre de gauche (13) comportant une paroi latérale gauche (13a) et la section de cadre de droite (13) comportant une paroi latérale droite (13a), dans la région supérieure des parois latérales (13a) la distance entre les parois latérales gauche et droite (13a) dans le sens de la largeur de la motocyclette étant supérieure à celle dans la région inférieure des parois latérales (13a) ;
un espace de rangement (B) étant formé entre les parois latérales gauche et droite (13a) ; et
les sections de cadre de gauche et de droite (13) comportant chacune une première face horizontale (13f) s'étendant vers l'extérieur dans le sens de la largeur de la motocyclette depuis le bord supérieur de chacune des parois latérales gauche et droite (13a), et
les sections de cadre de gauche et de droite (13) comportant chacune une seconde face horizontale (13i) s'étendant vers l'intérieur dans le sens de la largeur de la motocyclette depuis le bord inférieur de chacune des parois latérales gauche et droite (13a),
**caractérisée en ce que**
une boîte de rangement (10) est disposée dans l'espace de rangement (B) entre les parois latérales gauche et droite (13a) des sections de cadre de gauche et de droite (13), et
des sections de contact sont prévues, où la paroi latérale gauche (13a) de la section de cadre de gauche (13) est en contact avec la paroi latérale gauche (10v') de la boîte de rangement (10) et la paroi latérale droite (13a) de la section de cadre de droite (13) est en contact avec la paroi latérale droite (10v') de la boîte de rangement (10).

2. Motocyclette selon la revendication 1, **caractérisée en ce que** les sections de cadre de gauche et de droite (13) sont formées par coulage intégral.

3. Motocyclette selon la revendication 1 ou 2, **caractérisée en ce que** la première face horizontale (13f) et/ou la seconde face horizontale (13i) s'étendent dans le sens longitudinal de la motocyclette.

4. Motocyclette selon l'une des revendications 1 à 3, **caractérisée en ce que** le bord supérieur de chacune des sections de cadre de gauche et de droite (13) possède une forme en coupe sensiblement en U inversé, la première face horizontale (13f) s'étendant vers l'extérieur dans le sens de la largeur de la motocyclette et la première face verticale (13g) s'étendant vers le bas par rapport à la première face horizontale (13f).

5. Motocyclette selon l'une des revendications 1 à 4, **caractérisée en ce que** le bord inférieur de chacune des sections de cadre de gauche et de droite (13) possède une forme en coupe sensiblement en U inversé, la seconde face horizontale (13i) s'étendant vers l'intérieur dans le sens de la largeur de la motocyclette et une paire de secondes faces verticales (13j, 13k) s'étendant vers le bas par rapport à la seconde face horizontale (13i).

6. Motocyclette selon l'une des revendications 1 à 5, **caractérisée en ce qu'**au moins un élément de cadre (70) est soudé à une extrémité avant et/ou une extrémité arrière des sections de cadre de gauche et de droite (13).

7. Motocyclette selon la revendication 6, **caractérisée en ce que** l'élément de cadre (70) qui est soudé à l'extrémité avant et/ou à l'extrémité arrière des sections de cadre de gauche et de droite (13), est un élément d'extrusion s'étendant dans le sens longitudinal de la motocyclette.

8. Motocyclette selon la revendication 1, **caractérisée en ce que** les parois latérales gauche et droite (13a) des sections de cadre de gauche et de droite (13) recouvrent au moins partiellement une partie de la boîte de rangement (10), vue depuis un côté de la motocyclette.

9. Motocyclette selon la revendication 1 ou 8, **caractérisée en ce que** chaque section de contact est constituée en intercalant un élément élastique (38) entre la paroi latérale gauche (13a) de la section de cadre de gauche (13) et la paroi latérale gauche (10v') de la boîte de rangement (10) et entre la paroi latérale droite (13a) de la section de cadre de droite (13) et la paroi latérale droite (10v') de la boîte de rangement (10).

10. Motocyclette selon l'une des revendications 6 à 9, **caractérisée en ce que** les sections de cadre de gauche et de droite (13) sont reliées au moins par une section de paroi transversale (13b, 13d, 13m) s'étendant dans le sens de la largeur de la motocyclette.

11. Motocyclette selon la revendication 10, **caractérisée en ce qu'**une ouverture avant (13n) est formée avec les sections de cadre de gauche et de droite (13), une section de paroi transversale médiane (13d) et une section de paroi transversale avant (13m) et une ouverture arrière (13p) est formée avec les sections de cadre de gauche et de droite (13), la section de paroi transversale médiane (13d) et une section de paroi transversale arrière (13b).

12. Motocyclette selon la revendication 11, **caractérisée en ce que** la paroi inférieure (10c) de la boîte de rangement (10) est tournée vers le bord supérieur de la roue arrière (8) de la motocyclette par l'intermédiaire de l'ouverture arrière (13p).

13. Motocyclette selon l'une des revendications 1 ou 8 à 12, **caractérisée en ce que** la boîte de rangement (10) est fixée au moins à un siège de montage (13r) formé sur la première face horizontale (13f) de chacune des sections de cadre de gauche et de droite (13).

14. Motocyclette selon l'une des revendications 1 à 13, **caractérisée en ce qu'**au moins une section de support de siège (13b') est formée sur les sections de cadre de gauche et de droite (13), ladite section de support de siège supportant un siège (9) pour permettre l'ouverture et la fermeture de l'espace de rangement (B) par l'intermédiaire d'une articulation (50).

15. Motocyclette selon l'une des revendications 1 à 14, **caractérisée en ce que** la distance entre les parois latérales gauche et droite (13a) augmente progressivement vers la région supérieure de l'espace de rangement (B).
